Europäisches Patentamt

**European Patent Office**

Office européen des brevets

(11) Numéro de publication : **0 483 259 B1**

# (12) FASCICULE DE BREVET EUROPEEN

(45) Date de publication du fascicule du brevet :
**29.12.93 Bulletin 93/52**

(51) Int. Cl.$^5$ : **C01G 31/00, H01M 8/12**

(21) Numéro de dépôt : **90911647.7**

(22) Date de dépôt : **18.07.90**

(86) Numéro de dépôt international :
**PCT/FR90/00543**

(87) Numéro de publication internationale :
**WO 91/01274 07.02.91 Gazette 91/04**

(54) **COMPOSITIONS DERIVEES DE Bi4V2O11.**

Le dossier contient des informations techniques présentées postérieurement au dépôt de la demande et ne figurant pas dans le présent fascicule.

(30) Priorité : **18.07.89 FR 8909649**

(43) Date de publication de la demande :
**06.05.92 Bulletin 92/19**

(45) Mention de la délivrance du brevet :
**29.12.93 Bulletin 93/52**

(84) Etats contractants désignés :
**AT BE CH DE DK ES FR GB IT LI LU NL SE**

(56) Documents cités :
**Patent Abstracts of Japan, vol. 8, No. 156, C234, abstract of JP 59-57915, publ. 1984-04-03 (SHINGIJIYUTSU KAIHATSU JIGIYOUDAN) Chemical Abstracts, vol. 105, No. 4, 28 July 1986, (Columbus, Ohio, US), A.A. Bush: "Chrystals of the bismuth germanate (Bi2Ge05--bismuth vanadate (Bi4V2011) system", page 606, ref. 33123g, & Jpn J. Appl. Phys., Part 1 1985, 24 (suppl. 24-2), 625-627 Chemical Abstracts, vol. 107, No. 18, 2 November 1987, (Columbus, Ohio, US), V.G. Osipyan et al: "Bismuth vanadate ferroelectrics with a laminar structure", page 852, ref. 166848k, & Izv. Akad. Nauk SSSR, Neorg. Mater 1987, 23 (3), 523-525 Chemical Abstracts, volume 110, No. 12, 20 March 1989, (Columbus, Ohio, US), V. Koshelyaeva et al: "Bismuth vanadate (Bi4V2O11)-bismuth germanate (Bi2Ge05), bismuth vanadate-bismuth tungstate (Bi2WO6) and bismuth germanate-bismuth tungstate systems", page 497, ref. 102665c, & Zh. Neorg. Khim. 1988, 33(12), 3143-3146**

(73) Titulaire : **UNIVERSITE DES SCIENCES ET TECHNIQUES DE LILLE FLANDRES-ARTOIS (LILLE 1) Cité Scientifique F-59655 Villeneuve d'Ascq Cédex (FR)**
Titulaire : **ECOLE NATIONALE SUPERIEURE DE CHIMIE DE LILLE Bâtiment C7, Cité Scientifique F-59655 Villeneuve D'Ascq (FR)**
Titulaire : **INSTITUT NATIONAL POLYTECHNIQUE DE GRENOBLE 46, avenue Felix-Viallet F-38031 Grenoble (FR)**

(72) Inventeur : **ABRAHAM, Francis 726, rue de la Libération F-59242 Genech (FR)**
Inventeur : **BOIVIN, Jean-Claude 4, rue Castermant F-59150 Wattrelos (FR)**
Inventeur : **MAIRESSE, Gaétan 12, avenue de la République F-59130 Lambersart (FR)**
Inventeur : **NOWOGROCKI, Guy 2, rue Gambetta F-59000 Lille (FR)**
Inventeur : **KLEITZ, Michel 10, rue Lieutenant-Chanaron F-38000 Grenoble (FR)**
Inventeur : **FOULETIER, Jacques 2, rue Auguste-Ravier F-38100 Grenoble (FR)**

(74) Mandataire : **Desaix, Anne et al Ernest Gutmann - Yves Plasseraud S.A., 67 bld.Haussmann F-75008 Paris (FR)**

Jouve, 18, rue Saint-Denis, 75001 PARIS

(56) Documents cités :

**Chemical Abstracts, vol. 110, No. 14, 3 April 1989, (Columbus, Ohio, US), F. Abraham et al: "Phase transitions and ionic conductivity in bismuth vanadate (Bi4V2O11), an oxide with a layered structure", page 779, ref. 125933c, & Solid State Ionics 1988, 28, 529-532**

**Chemical Abstracts, volume 110, No. 26, 26 June 1989, (Columbus, Ohio, US), Borisov, V.N. et al: "Dielectric properties of bismuth vanadate complex oxides", page 651, ref. 241047r, & Ukr. Fiz. Zh. (Russ. Ed.) 1989, 34 (3), 408-410**

2

## Description

L'invention a pour objet de nouvelles compositions dérivées de $Bi_4V_2O_{11}$ et leurs applications électrochimiques, en particulier comme électrolytes conducteurs par anions $O^{2-}$ (oxyde).

Un électrolyte solide conducteur par anions $O^{2-}$ est un matériau dans lequel les anions $O^{2-}$ ou les lacunes peuvent se déplacer de manière coordonnée sous l'effet d'une sollicitation externe telle qu'un champ électrique ou une différence de pression partielle en oxygène.

Les matériaux actuellement disponibles sont essentiellement des dérivés de l'oxyde de zirconium $Zr\, O_2$, stabilisé par des oxydes divalents tels que CaO ou par des oxydes trivalents tels que $Y_2O_3$ (R.M. Dell et al, Solid electrolytes, ed. by P. Hagenmuller et W. Van Gool Academic Press), ou mieux des dérivés de $Bi_2O_3$ stabilisés principalement par des oxydes de métaux de terres rares comme $Er_2O_3$ (M.J Verkerk et al, Journal of applied electrochemistry 10 (1980) 81-90).

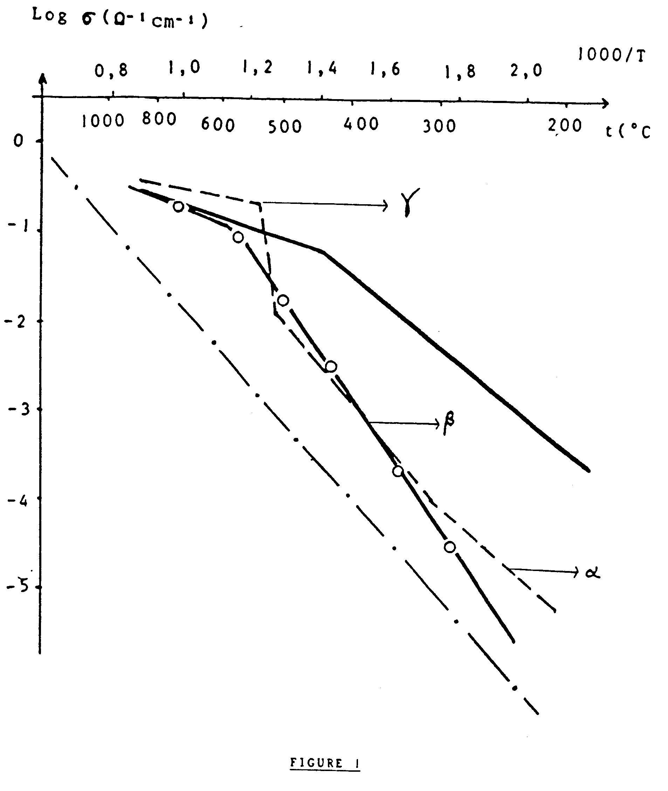

Ces derniers présentent des conductivités de l'ordre de $10^{-1}\Omega^{-1}cm^{-1}$ à 600°C, mais leurs performances chutent rapidement avec la température (voir figure 1).

Les oxydes $ZrO_2$ et $Bi_2O_3$ stabilisés possèdent une même structure de base, dérivée de la structure dite de type fluorine dans laquelle les sites des $O^{2-}$ présentent des lacunes qui permettent la mobilité des anions, qui est donc structurellement de nature tridimensionnelle.

Une conductivité élevée, également supérieure à $10^{-1}\,\Omega^{-1}\,cm^{-1}$, a été observée sur la phase gamma de $Bi_4V_2O_{11}$ au-dessus d'environ 550°C (voir figure 1).

Ce composé présente trois domaines structuraux $\alpha$, $\beta$ et gamma. Les évolutions structurales se produisant lors des transitions de phase au refroidissement font chuter cette conductivité lors des transformations $\gamma \rightarrow \beta$ puis $\beta \rightarrow \alpha$.

La phase gamma, dans $Bi_4V_2O_{11}$, se caractérise par une succession de couches $Bi_2O_2^{2+}$ alternant avec des feuillets de formulation $VO_{3.5}^{2-}$.

Les couches $Bi_2O_2^{2+}$ sont constituées d'atomes d'oxygène disposés dans un même plan aux sommets de carrés adjacents, les atomes de bismuth étant situés alternativement au-dessus et en-dessous de ces carrés. Entre deux couches $Bi_2O_2^{2+}$ s'intercale un feuillet constitué par les polyèdres oxygénés du vanadium, liés par des sommets et s'étendant dans un plan parallèle à celui des couches $Bi_2O_2^{2+}$; ces feuillets sont lacunaires en oxygène.

Les inventeurs ont à présent constaté qu'en substituant partiellement au moins l'un des éléments constitutifs de $Bi_4V_2O_{11}$, il est possible de stabiliser chimiquement la phase gamma.

L'invention a donc pour but de fournir de nouvelles compositions dérivées de $Bi_4V_2O_{11}$, ayant une conductivité améliorée par rapport à celle des oxydes connus proposés comme électrolytes.

Elle vise également à fournir un procédé de mise en oeuvre aisée pour leur obtention.

L'invention vise également la mise à profit des propriétés de conductivité élevée des nouvelles compositions dérivées de $Bi_4V_2O_{11}$ pour l'élaboration d'électrolytes à conduction par ions $O^{2-}$.

Les compositions de l'invention sont des dérivés de $Bi_4V_2O_{11}$ dans lesquels au moins l'un des éléments constitutifs est partiellement substitué, le ou les élément(s) substituant(s) étant tel(s) que le type structural de la phase gamma de $Bi_4V_2O_{11}$ est maintenu ainsi que l'équilibre des charges.

Les compositions de l'invention sont plus spécialement caractérisées en ce qu'elles répondent à la formule (I) :

$$(Bi_{2-x}\, M_x\, O_2)\ (V_{1-y}\, M'_y\, O_z) \qquad (I)$$

dans laquelle :

- M représente un ou plusieurs métaux de substitution de Bi, choisi(s) parmi ceux ayant un nombre d'oxydation inférieur ou égal à 3,
- M' représente un ou plusieurs éléments de substitution de V, les valeurs limites de x, y et donc z étant fonctions de la nature des éléments substituants M et M'.

La substitution partielle des éléments constitutifs de $Bi_4V_2O_{11}$ comme défini ci-dessus, stabilise le type structural de la phase gamma et maintient, dans le réseau des ions $O^{2-}$, un taux de lacunes suffisant pour permettre la conductivité anionique. Il s'agit donc d'une conduction essentiellement bidimensionnelle, les atomes d'oxygène des couches $Bi_{2-x}M_xO_2$, fortement liés aux atomes de bismuth, ne pouvant eux se déplacer.

La conductivité anionique de ces phases est remarquable puisqu'elle atteint $10^{-3}\,\Omega^{-1}cm^{-1}$ vers 200°C, ce qui est de l'ordre de cent fois supérieur aux performances des meilleurs matériaux actuellement sur le marché (voir figure 1).

Une famille préférée de compositions selon l'invention est constituée par des dérivés de $Bi_4V_2O_{11}$, dans lesquels seul l'atome de vanadium est partiellement substitué par un ou plusieurs éléments. Ces compositions répondent à la formule (II) :

$$(Bi_2O_2)\ (V_{1-y}\, M'_y\, O_z) \qquad (II)$$

dans laquelle M', est tel que défini ci-dessus, y étant non nul.

M' est avantageusement sélectionné parmi les métaux alcalins, alcalino-terreux, les métaux de transition, ou encore les éléments des groupes IIIa à Va ou IIIb à Vb de la classification periodique, ou parmi les terres rares.

Des compositions de grande stabilité et de conductivité élevée à basse température comprennent comme métal substituant le vanadium, un métal de transition tel que Zn, Cu, Ni, Co, Fe, Mn et Cd.

En variante, M' est un métal alcalino-terreux choisi notamment parmi Ca, Sr, et Ba.

M' est dans une autre variante un métal ayant un degré d'oxydation égal à 3. Des métaux avantageux comprennent notamment Sb, In et Al.

Dans encore une autre variante, M' présente un degré d'oxydation de 4. Parmi ces métaux, on citera Ti, Sn ou Ru.

M' peut également représenter un élément de substitution de degré d'oxydation égal à 5 tel que Nb, Ta ou P.

M' peut également être un métal de terres rares.

Dans un autre mode de réalisation, M' est un métal alcalin comme le sodium ou peut représenter Pb au degré d'oxydation 2.

Dans une autre famille préférée de l'invention, seul l'atome de bismuth est substitué partiellement par un ou plusieurs métaux. Ces dérivés répondent à la formule (III) :

$$(Bi_{2-x} M_x O_2) (VO_z) \qquad (III)$$

dans laquelle
- M est tel que défini ci-dessus, x étant non nul.

Dans des compositions particulièrement préférées de cette famille, M est choisi parmi les métaux de terres rares.

Avantageusement, M représente le lanthane.

Une autre famille préférée de compositions de l'invention correspond aux dérivés de formule (I) ci-dessus, dans lesquels l'atome d'oxygéne est partiellement substitué par du fluor.

D'autres compositions également avantageuses comportent des substitutions mixtes du bismuth et du vanadium et correspondent à la formule (I) ci-dessus dans laquelle x et y sont non nuls.

Comme composition de ce type, on citera :

$$(Bi_{2-x} Pb_x O_2) (V_{1-y} Mo_y O_z)$$

On observe la stabilisation du type structural de la phase gamma de $Bi_4V_2O_{11}$ pour des valeurs de x et y comprises sensiblement entre 0,1 et 0,23.

L'invention concerne également un procédé de fabrication des compositions définies ci-dessus.

Selon ce procédé, on soumet un mélange des oxydes de bismuth, Vanadium, élément M et/ou M' mis en oeuvre selon les quantités appropriées compte tenu du degré d'oxydation de M et M', à une température suffisante avantageusement de l'ordre de 600°C pendant 10 à 15 heures. Le mélange est ensuite broyé, puis porté à une température supérieure, avantageusement de l'ordre de 700 à 800°C pendant 10 à 15 heures, le cycle chauffage-broyage étant le cas échéant renouvelé jusqu'à l'obtention de la phase recherchée.

Dans une variante du procédé, les constituants du mélange de départ pourront être remplacés en tout ou partie par des composés conduisant par décomposition thermique à la formation in situ des oxydes. Ces composés pourront être avantageusement choisis parmi : carbonates, nitrates, sels d'ammonium, oxalates, acétates ou alcoxydes.

La pureté des phases obtenues est contrôlée par diffraction X sur poudre.

Compte tenu de leurs propriétés de conductivité élevée, les nouvelles compositions de l'invention sont particulièrement appropriées pour l'élaboration d'électrolytes solides.

Ces électrolytes sont spécialement performants dans le domaine dit des basses températures, à savoir en-dessous de 500°C, domaine où les systèmes basés sur les conducteurs par $O^{2-}$ connus jusqu'ici sont peu performants.

L'invention vise également les applications électrochimiques de ces compositions et les dispositifs électrochimiques "tout solide" les renfermant en tant qu'électrolytes.

Ils sont ainsi particulièrement appropriés pour l'élaboration, notamment, de jauges à oxygène, de capteurs ampérométriques ou encore de membranes pour la séparation électrochimique de l'oxygène gazeux permettant l'enrichissement en oxygène.

Des membranes réalisées selon la technologie décrite dans Solid State Ionics 28-30 (1988), 524-528 par Dumélié M. et al sont spécialement adaptées.

Les compositions de l'invention sont également utilisables dans les piles à combustible ($O_2$ + $H_2$ ou CO).

Dans ces applications, les compositions de l'invention sont utilisées sous forme de céramique frittée, couches minces ou films obtenus par hypertrempe.

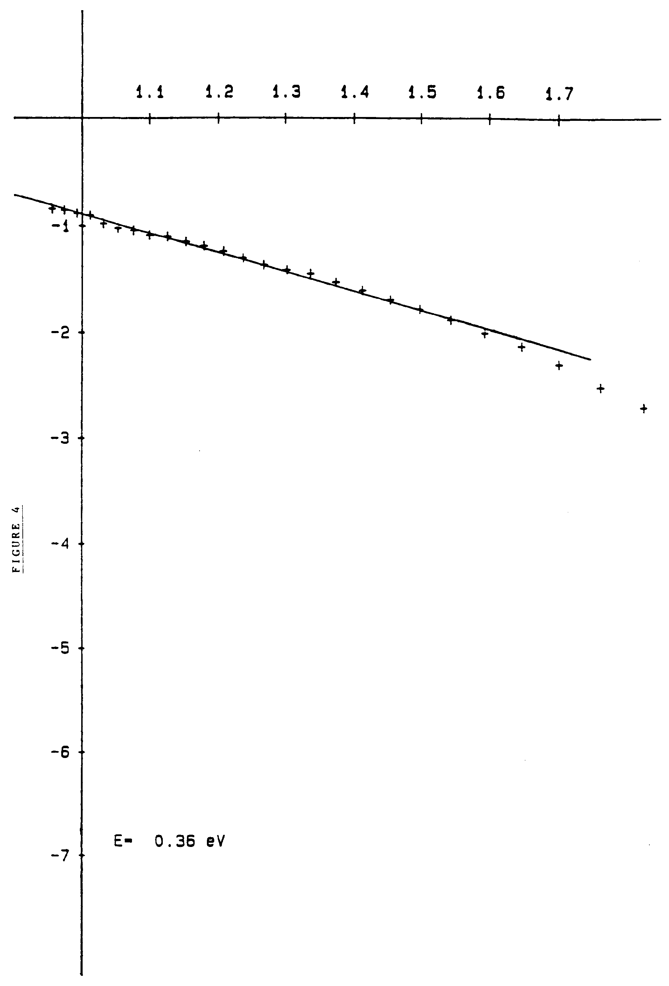

D'autres caractéristiques et avantages de l'invention apparaitront dans l' exemple qui suit et en se référant aux figures 1 à 4 qui représentent les courbes de la conductivité (logo en $\Omega^{-1}cm^{-1}$) en fonction de la température (1000/T ou température en °C) de compositions de l'invention.

Les propriétés de conduction ont été caractérisées par spectrométrie d'impédance, par mesure du nombre de transport des ions oxyde $O^{2-}$ (t) par la méthode de la f.é.m.

Les déterminations structurales ont été effectuées par diffraction X sur monocristal.

## EXEMPLE :

## PREPARATION DE COMPOSITIONS DERIVEES DE $Bi_4V_2O_{11}$ DANS LESQUELLES LE VANADIUM EST SUBSTITUE PAR UN METAL M'

Lorsqu'on substitue le vanadium par un métal M' de degré d'oxydation égal à 2, on opère selon la réaction suivante :

$$Bi_2O_3 \; + \; \frac{(1-y)}{2} V_2O_5 \; + \; y \, M'O \longrightarrow$$

$$Bi_2V_{1-y}M'y \, O_{3+5}\frac{(1-y)}{2} + y, \text{ soit } Bi_2 V_{1-y} M'_y O_{(5.5 - 3y/2)}$$

Une valeur de y avantageusement choisie pour cet exemple est y = 0,1 conduisant à la composition $Bi_2V_{0.9}M'_{0.1}O_{5.35}$

Les oxydes de départ mis en oeuvre selon la stoechiométrie du schéma ci-dessus, sont broyés, mélangés intimement, puis portés à une température de 600°C, dans une nacelle d'or, pendant 12 heures environ.

Le mélange est alors à nouveau broyé et porté à 800°C pendant environ 12 heures, toujours dans une nacelle d'or.

On indique ci-après quelques oxydes M'O utilisés en mélange avec $Bi_2O_3$ et $V_2O_5$ : ZnO, CuO, NiO, CoO, CaO, SrO, BaO, PbO.

Les déterminations structurales par diffraction X sur monocristal

1°) sur $Bi_2V_{0.9}Cu_{0.1}O_{5.35}$, à température ambiante,

2°) sur $Bi_4V_2O_{11}$ à haute température (phase gamma 610°C)

permettent de décrire les caractéristiques de base du type structural auquel se réfèrent les composés de la présente invention.

## RESULTATS DE L'AFFINEMENT

1°) $Bi_2V_{0.9}Cu_{0.1}O_{5.35}$
maille quadratique de paramètres a = 3,907(1); c = 15,408(11) Å
groupe d'espace $I_{4/mmm}$.

| ATOMES | TYPE DE SITE | OCCUPATION DU SITE | x | y | z | B |
|--------|---------|-----------|---|---|---|---|
| Bi(1) | 16m | 1/8 | 0,0430(9) | 0,0430 | 0,1659(3) | 3,4 (1) |
| Bi(2) | 4e | 1/2 | 0 | 0 | 0,1705(1) | 1,23 (2) |
| (V,Cu) | 8h | 1/4 | 0,0524(8) | 0,0524 | 1/2 | 1,14 (8) |
| O(1) | 4d | 1 | 0 | 1/2 | 1/4 | 2,5 (2) |
| O(2) | 16m | 1/4 | 0,084(7) | 0,084 | 0,400(2) | 6,1 (1) |
| O(3) | 8g | 0,3375 | 0 | 1/2 | 0,037(2) | 5,8 (9) |

REMARQUES :

1/ le produit des chiffres appartenant aux 2 colonnes "type de site" et "occupation du site" traduit la stoechiométrie du matériau:

$$
\left.\begin{array}{l}
\text{Bi}(1) \quad : \ 16 \ \times \ 1/8 \ = \ 2 \ \vdots \\
\text{Bi}(2) \quad : \ \ 4 \ \times \ 1/2 \ = \ 2 \ \vdots \ \text{soit 4Bi} \\
(\text{V},\text{Cu}): \ \ 8 \ \times \ 1/4 \ = \ 2 \quad \text{soit 2(V,Cu)} \\
\text{O}(1) \quad : \ \ 4 \ \times \ 1 \ \ = \ 4 \qquad \vdots \\
\text{O}(2) \quad : \ 16 \ \times \ 1/4 \ = \ 4 \qquad \vdots \text{soit 10,70} \\
\text{O}(3) \quad : \ \ 8 \ \times \ 0,3375 \ = \ 2,7 \ \vdots
\end{array}\right\} \quad \text{Bi}_4(\text{V},\text{Cu})_2\text{O}_{10,7}
$$

2/ un affinement de qualité identique est obtenu en localisant Bi(1) en site de type 16n, (x, O, z) avec un taux d'occupation de 1/8 (ce qui conduit à x = 0,061(1) et z = 0,1658(3)).

2°) phase gamma $Bi_4V_2O_{11}$, 610°C.

maille quadratique de paramètres a = 3,98 c = 15,42 Å; même groupe spatial $I_{4/mmm}$.

## RESULTATS DE L'AFFINEMENT

| ATOMES | TYPE DE SITE | OCCUPATION DU SITE | $x$ | $y$ | $z$ | $B$ |
|---|---|---|---|---|---|---|
| Bi(1) | 16m | 1/8 | 0,053(2) | 0,053 | 0,1640(6) | 3,0 (3) |
| Bi(2) | 4e | 1/2 | 0 | 0 | 0,1731(6) | 2,1 (1) |
| (V) | 8h | 1/4 | 0,041(5) | 0,04 | 1/2 | 3,3 (4) |
| O(1) | 4d | 1 | 0 | 1/2 | 1/4 | 3,1 (4) |
| O(2) | 4e | 1 | 0 | 0 | 0,414(5) | 14 (2) |
| O(3) | 8g | 0,375 | 0 | 1/2 | 0,027(5) | 9 (3) |

Les remarques 1) et 2) sont également valables.

Ces résultats permettent de se référer à une structure idéalisée appartenant au groupe spatial $I_{4/mmm}$ (avec des paramètres voisins de a = 3,9 et c = 15,4 Å) dans laquelle les atomes occupent les sites suivants :

| ATOMES | TYPE DE SITE | $x$ | $y$ | $z$ |
|---|---|---|---|---|
| (Bi,M) | 4e | 0 | 0 | ~ 0,17 |
| (V,M') | 2b | 0 | 0 | 1/2 |
| O(1) | 4d | 0 | 1/2 | 1/4 |
| O(2) | 4e | 0 | 0 | ~ 0,4 |
| O(3) | 4c | 0 | 1/2 | 0 |

Les matériaux faisant l'objet de la présente invention possèdent une structure dérivée de cette description idéalisée avec éventuellement :
- des éclatements autour de ces positions,
- la perte d'un ou de plusieurs éléments de symétrie,
- une multiplication des paramètres de maille.

Les taux d'occupation des sites de 0(2) et 0(3) sont fonctions de la nature, du taux de substitution, et du degré d'oxydation des éléments M et M'.

Sur les figures 1 à 4, on rapporte les courbes de conductivité en fonction de la température de divers conducteurs oxygénés.

La figure 1 représente la conductivité log σ en $\Omega^{-1}cm^{-}$ en fonction :

6

- de 1000/T, ou de la température en °C de $Bi_2V_{0.9}Cu_{0.1}O_{5.35}$ (courbe —) et à titre de comparaison de $Bi_4V_2O_{11}$ (courbe -----), et des oxydes stabilisés $(ZrO_2)_{0.9}$ $(Y_2O_3)_{0.1}$ (courbe —.—.) et $(Bi_2O_3)_{0.8}(Er_2O_3)_{0.2}$ (courbe—o—).

L'examen de ces courbes met en évidence le maintien de valeurs élevées de la conductivité de compositions de l'invention par rapport à celles de l'art antérieur, lorsque la température décroît.

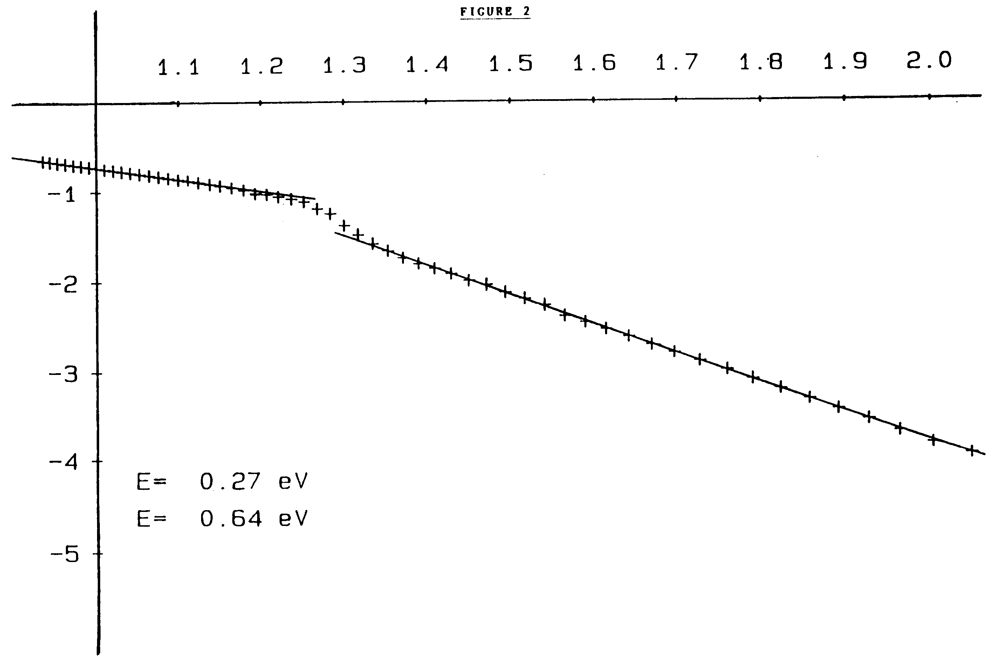

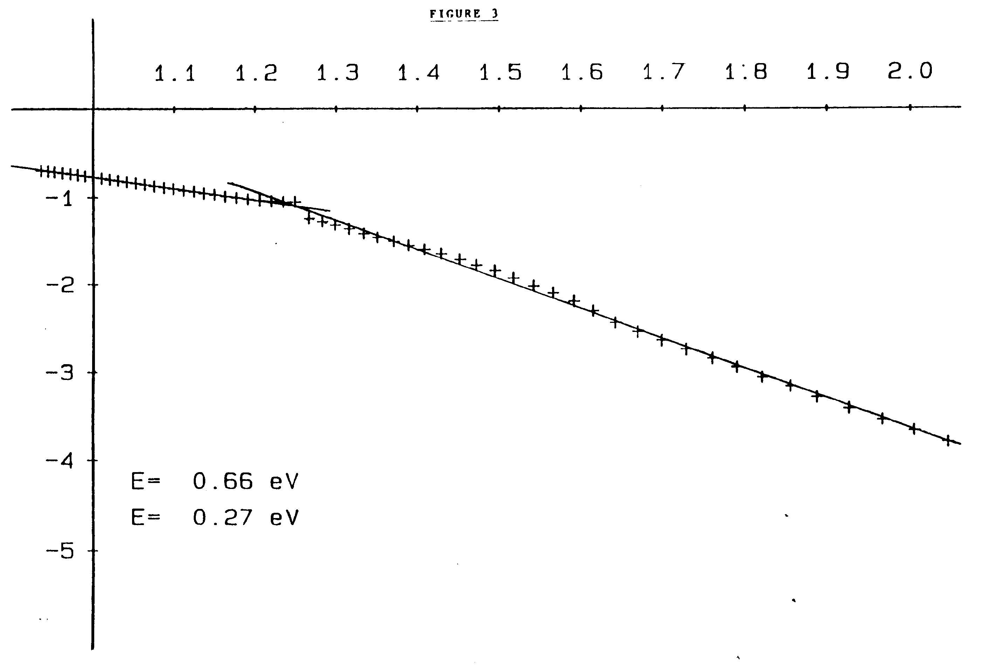

Les figures 2, 3 et 4 représentent respectivement des exemples de courbes de conductivité en fonction de 1000/T avec $Bi_2V_{0.9}Zn_{0.1}O_{5.35}$, $Bi_2V_{0.9}Ni_{0.1}O_{5.35}$ et $Bi_2V_{0.9}Cu_{0.10}O_{5.35}$.

L'examen de ces différentes courbes met en évidence les propriétés de conductivité élevées des compositions de l'invention qui se maintiennent de manière satisfaisante lorsque la température diminue.

## Revendications

**Revendications pour les Etats contractants suivants : AT, BE, CH, DE, DK, FR, GB, IT, LI, LU, NL, SE**

1.  Compositions dérivées de $Bi_4V_2O_{11}$, caractérisées en ce que l'un au moins des éléments constitutifs est partiellement substitué, le ou les élément(s) substituant(s) étant tel(s) que le type structural de la phase gamma de $Bi_4V_2O_{11}$ est maintenu, ainsi que l'équilibre des charges et un taux de lacune suffisant pour permettre la conductivité anionique.

2.  Compositions dérivées de $Bi_4V_2O_{11}$ selon la revendication 1, caractérisées en ce qu'elles répondent à la formule (I):
$$(Bi_{2-x} M_x O_2) (V_{1-y}M'_y O_z) \qquad (I)$$
dans laquelle :
    - M représente un ou plusieurs métaux de substitution de Bi, choisi(s) parmi ceux ayant un nombre d'oxydation inférieur ou égal à 3,
    - M' représente un ou plusieurs éléments de susbtitution de V,
    les valeurs limites de x, y et donc z étant fonctions de la nature des éléments substituants M et M'.

3.  Compositions selon la revendication 2, caractérisées en ce qu'elles répondent à la formule (II) :
$$(Bi_2O_2) (V_{1-y} M'_y O_z) \qquad (II)$$
dans laquelle :
    - M' est tel que défini dans la revendication 2, y étant non nul.

4.  Compositions selon la revendication 3, caractérisées en ce que M' est sélectionné parmi les métaux alcalins, alcalino-terreux, les métaux de transition, ou encore les éléments des groupes IIIa à Va ou IIIb à Vb de la classification périodique ou parmi les terres rares.

5.  Compositions selon la revendication 2, caractérisées en ce qu'elles répondent à la formule III:
$$(Bi_{2-x} M_x O_2) (VO_z) \qquad (III)$$
dans laquelle :
    - M est tel que défini dans la revendication 2, x étant non nul.

6.  Compositions selon la revendication 5, caractérisées en ce que M représente du lanthane.

7.  Compositions selon la revendication 2, caractérisées en ce qu'elles répondent à la formule (I), dans laquelle x et y sont non nuls.

8.  Procédé de fabrication de compositions selon l'une quelconque des revendications 1 ou 2, caractérisées en ce qu'on soumet à une température d'environ 600°C, pendant 10 à 15 heures, un mélange des oxydes de bismuth, vanadium, de M et/ou M', mis en oeuvre selon les quantités appropriées compte tenu du degré d'oxydation de M et M', on broie le mélange, puis on le porte à une température supérieure de l'ordre de 700 à 800°C, pendant 10 à 15 heures, le cycle chauffage-broyage étant le cas échéant renouvelé dans les conditions précédentes jusqu'à l'obtention de la phase recherchée.

9.  Procédé selon la revendication 8, caractérisé en ce que tout ou partie des oxydes de départ sont remplacés le cas échéant, par des composés conduisant par décomposition thermique à la formation in situ desdits oxydes.

**10.** Electrolytes solides conducteurs par anions $O^{2-}$, caractérisés en ce qu'ils sont élaborés à partir d'au moins une composition selon l'une quelconque des revendications 1 à 7.

**Revendications pour l'Etat contractant suivant : ES**

**1.** Procédé de fabrication de compositions dérivées de $Bi_4V_2O_{11}$, dans lesquelles l'un au moins des éléments constitutifs est partiellement substitué, l'élément M ou les éléments substituants M et M' étant tel(s) que le type structural de la phase gamma de $Bi_4V_2O_{11}$ soit maintenu, et que soient aussi maintenus l'équilibre des charges et un taux de lacune suffisant pour permettre la conductivité anionique, caractérisé en ce qu'on soumet à une température d'environ 600°C, pendant 10 à 15 heures, un mélange des oxydes de bismuth, vanadium, de M et/ou M', mis en oeuvre selon les quantités appropriées compte tenu du degré d'oxydation de M et M', on broie le mélange, puis on le porte à une température supérieure de l'ordre de 700 à 800°C, pendant 10 à 15 heures, le cycle chauffage-broyage étant le cas échéant renouvelé dans les conditions précédentes jusqu'à l'obtention de la phase recherchée.

**2.** Procédé pour la fabrication de compositions dérivées de $Bi_4V_2O_{11}$, selon la revendication 1, caractérisées en ce qu' elles répondent à la formule (I):
$$(Bi_{2-x} M_x O_2) (V_{1-y} M'_y O_z) \qquad (I)$$
dans laquelle :
- M représente un ou plusieurs métaux de substitution de Bi, choisi(s) parmi ceux ayant un nombre d'oxydation inférieur ou égal à 3,
- M' représente un ou plusieurs éléments de susbtitution de V,

les valeurs limites de x, y et donc z étant fonctions de la nature des éléments substituants M et M'.

**3.** Procédé pour la fabrication de compositions selon la revendication 2, caractérisées en ce qu'elles répondent à la formule (II) :
$$(Bi_2O_2) (V_{1-y} M'_y O_z) \qquad (II)$$
dans laquelle :
- M' est tel que défini dans la revendication 2, y étant non nul.

**4.** Procédé pour la fabrication de compositions selon la revendication 3, caractérisé en ce que M' est sélectionné parmi les métaux alcalins, alcalino-terreux, les métaux de transition, ou encore les éléments des groupes IIIa à Va ou IIIb à Vb de la classification périodique ou parmi les terres rares.

**5.** Procédé pour la fabrication de compositions selon la revendication 2, répondant à la formule III:
$$(Bi_{2-x} M_x O_2) (VO_z) \qquad (III)$$
dans laquelle :
- M est tel que défini dans la revendication 2, x étant non nul.

**6.** Procédé pour la fabrication de compositions selon la revendication 5, dans lesquelles M représente du lanthane.

**7.** Procédé pour la fabrication de compositions selon la revendication 2, caractérisées en ce qu'elles répondent à la formule (I), dans laquelle x et y sont non nuls.

**8.** Procédé selon l'une quelconque des revendications 1 à 7, caractérisé en ce que tout ou partie des oxydes de départ sont remplacés le cas échéant, par des composés conduisant par décomposition thermique à la formation in situ desdits oxydes.

**9.** Procédé de production d'électrolytes solides conducteurs par anions $O^{2-}$, caractérisés en ce qu'ils sont élaborés à partir d'au moins une composition selon l'une quelconque des revendications 1 à 7.

**Patentansprüche**

**Patentansprüche für folgende Vertragsstaaten : AT, BE, CH, LI, DE, DK, FR, GB, IT, LU, NL, SE**

**1.** Von $Bi_4V_2O_{11}$ abgeleitete Zusammensetzungen, dadurch gekennzeichnet, daß mindestens einer der Grundbestandteile partiell substituiert ist, wobei das (die) Substitutionselement(e) so beschaffen ist (sind), daß der Strukturtyp der gamma-Phase von $Bi_4V_2O_{11}$ sowie das Ladungsgleichgewicht und ein ausreichender Fehlstellenanteil beibehalten ist, um eine Anionenleitfähigkeit zu ermöglichen.

2.  Von $Bi_4V_2O_{11}$ abgeleitete Zusammensetzungen gemäß Anspruch 1, gekennzeichnet durch die Formel (I):
$$(Bi_{2-x} M_xO_2) (V_{1-y} M'_y O_z) \qquad (I)$$
in der:
- M ein Substitutionsmetall des Bi oder mehrere darstellt, ausgewählt aus solchen, die eine Oxidationszahl unterhalb von oder gleich 3 haben,
- M' ein Substitutionselement des V oder mehrere darstellt,
wobei die Grenzwerte von x, y und somit z von der Natur der Substitutionselemente M und M' abhängen.

3.  Zusammensetzungen gemäß Anspruch 2, gekennzeichnet durch die Formel (II):
$$(Bi_2O_2) (V_{1-y} M'_y O_z) \qquad (II)$$
in der:
- M' wie in Anspruch 2 definiert ist und Y nicht 0 ist.

4.  Zusammensetzungen gemäß Anspruch 3, dadurch gekennzeichnet, daß M' unter den Alkalimetallen, Erdalkalimetallen, den Übergangsmetallen, oder weiterhin unter den Elementen der Gruppen IIIa bis Va oder IIIb bis Vb des Periodensystems oder unter den Seltenen Erden ausgewählt ist.

5.  Zusammensetzungen gemäß Anspruch 2, gekennzeichnet durch die Formel (III):
$$(Bi_{2-x} M_x O_2) (VO_z) \qquad (III)$$
in der:
- M wie in Anspruch 2 definiert ist und x nicht 0 ist.

6.  Zusammensetzungen gemäß Anspruch 5, dadurch gekennzeichnet, daß M Lanthan ist.

7.  Zusammensetzungen gemäß Anspruch 2, dadurch gekennzeichnet, daß sie der Formel (I) entsprechen, in der x und y nicht 0 sind.

8.  Verfahren zur Herstellung der Zusammensetzungen gemäß eines jeden der Ansprüche 1 oder 2, dadurch gekennzeichnet, daß man ein Gemisch von Oxiden des Wismuts, des Vanadiums, des M und/oder des M' 10 bis 15 Stunden einer Temperatur von ungefähr 600°C unterwirft, eingesetzt in den geeigneten Mengen unter Berücksichtigung des Oxidationsgrads von M und M', und daß man das Gemisch zerkleinert sowie anschließend 10 bis 15 Stunden auf eine erhöhte Temperatur in der Größenordnung von 700 bis 800°C erhitzt, wobei der Zyklus des Erhitzens-Zerkleinerns gegebenenfalls unter den obigen Bedingungen bis zum Erhalt der gesuchten Phase wiederholt wird.

9.  Verfahren gemäß Anspruch 8, dadurch gekennzeichnet, daß sämtliche oder ein Teil der Ausgangsoxide gegebenenfalls durch Verbindungen ersetzt werden, die durch thermische Zersetzung zu der in-situ-Bildung der genannten Oxide führen.

10. Durch Anionen $O^{2-}$ leitende Elektrolyte, dadurch gekennzeichnet, daß sie ausgehend von mindestens einer Zusammensetzung gemäß eines jeden der Ansprüche 1 bis 7 hergestellt sind.

**Patentansprüche für folgenden Vertragsstaat : ES**

1.  Verfahren zur Herstellung von von $Bi_4V_2O_{11}$ abgeleiteten Zusammensetzungen, in denen mindestens einer der Grundbestandteile partiell substituiert ist, wobei das Element M oder die Substitutionselemente M und M' so beschaffen ist (sind), daß der Strukturtyp der gamma-Phase von $Bi_4V_2O_{11}$ aufrechterhalten und ebenfalls das Ladungsgleichgewicht und ein ausreichender Fehlstellenanteil beibehalten wird, um eine Anionenleitfähigkeit zu ermöglichen, dadurch gekennzeichnet, daß man ein Gemisch von Oxiden des Wismuts, des Vanadiums, des M und/oder des M' 10 bis 15 Stunden einer Temperatur von etwa 600°C unterwirft, eingesetzt in den geeigneten Mengen unter Berücksichtigung des Oxidationsgrads von M und M', und daß man das Gemisch zerkleinert sowie anschließend 10 bis 15 Stunden auf eine erhöhte Temperatur in der Größenordnung von 700 bis 800°C erhitzt, wobei der Zyklus des Erhitzens-Zerkleinerns gegebenenfalls unter den obigen Bedingungen bis zum Erhalt der gesuchten Phase wiederholt wird.

2.  Verfahren zur Herstellung von von $Bi_4V_2O_{11}$ abgeleiteten Zusammensetzungen gemäß Anspruch 1, dadurch gekennzeichnet, daß sie der Formel (I) entsprechen:

$$(Bi_{2-x} M_x O_2) (V_{1-y} M'_y O_z) \qquad (I)$$

in der:
- M ein Substitutionsmetall des Bi oder mehrere darstellt, ausgewählt aus solchen, die eine Oxidationszahl unterhalb oder gleich 3 haben,
- M' ein Substitutionselement des V oder mehrere darstellt,

wobei die Grenzwerte von x, y und somit z von der Natur der Substitutionselemente M und M' abhängen.

3. Verfahren zur Herstellung von Zusammensetzungen gemäß Anspruch 2, dadurch gekennzeichnet, daß sie der Formel (II):

$$(Bi_2 O_2) (V_{1-y} M'_y O_z) \qquad (II)$$

entsprechen, in der:
- M' wie in Anspruch 2 definiert ist und Y nicht 0 ist.

4. Verfahren zur Herstellung von Zusammensetzungen gemäß Anspruch 3, dadurch gekennzeichnet, daß M' unter den Alkalimetallen, Erdalkalimetallen, den Übergangsmetallen, oder weiterhin unter den Elementen der Gruppen IIIa bis Va oder IIIb bis Vb des Periodensystems oder unter den Seltenen Erden ausgewählt ist.

5. Verfahren zur Herstellung von Zusammensetzungen gemäß Anspruch 2, dadurch gekennzeichnet, daß sie der Formel (III):

$$(Bi_{2-x} M_x O_2) (VO_z) \qquad (III)$$

entsprechen, in der:
- M wie in Anspruch 2 definiert ist und x nicht 0 ist.

6. Verfahren zur Herstellung von Zusammensetzungen gemäß Anspruch 5, bei denen M Lanthan ist.

7. Verfahren zur Herstellung von Zusammensetzungen gemäß Anspruch 2, dadurch gekennzeichnet, daß sie der Formel (I) entsprechen, in der x und y nicht 0 sind.

8. Verfahren gemäß eines jeden der Ansprüche 1 bis 7, dadurch gekennzeichnet, daß sämtliche oder ein Teil der Ausgangsoxide gegebenenfalls durch Verbindungen ersetzt werden, die durch thermische Zersetzung zu der in-situ-Bildung der genannten Oxide führen.

9. Verfahren zur Herstellung von festen, durch Anionen $O^{2-}$ leitenden Elektrolyten, dadurch gekennzeichnet, daß sie ausgehend von mindestens einer Zusammensetzung gemäß eines jeden der Ansprüche 1 bis 7 hergestellt sind.

## Claims

**Claims for the following Contracting States : AT, BE, CH, LI, DE, DK, FR, GB, IT, LU, NL, SE**

1. Compositions derived from $Bi_4V_2O_{11}$, characterized in that at least one of the constituent elements is partially substituted, the substituting element(s) being such that the structural type of the gamma phase of $Bi_4V_2O_{11}$ is maintained, as well as are the balance of the charges and a number of cavities sufficient to allow anionic conductivity.

2. Compositions derived from $Bi_4V_2O_{11}$ according to Claim 1, characterized in that they correspond to the formula (I):

$$(Bi_{2-x} M_x O_2) (V_{1-y} M'_y O_z) \qquad (I)$$

in which :
- M represents one or more metal replacements for Bi selected from those having an oxidation number lower than or equal to 3,
- M' represents one or more elements which can substitute for V, the limit values of x, y and hence z being functions of the nature of the substituting elements M and M'.

3. Compositions according to Claim 2, characterized in that they correspond to the formula (II):

$$(Bi_2 O_2) (V_{1-y} M'_y O_z) \qquad (II)$$

in which
- M' is as defined in Claim 2, y being other than zero.

4. Compositions according to Claim 3, characterized in that M' is selected from the alkali metals, alkaline earth metals, the transition metals or even from the elements of groups IIIA to Va or IIIb toVb of the periodic table or from the rare earths.

5. Compositions according to Claim 2, characterized in that they correspond to the formula III:
$$(Bi_{2-x} M_x O_2) (VO_z) \qquad (III)$$
in which :
- M is as defined in Claim 2, x being other than zero.

6. Compositions according to Claim 5, characterized in that M represents lanthanum.

7. Compositions according to Claim 2, characterized in that they correspond to formula (I) in which x and y are other than zero.

8. Manufacturing process for compositions according to any one of the Claims 1 or 2, characterized in that a mixture of the oxides of bismuth, vanadium and M and/or M', used in appropriate amounts which depend on the level of oxidation of M and M', is subjected to a temperature of about 600°C for 10 to 15 hours, the mixture is ground and then heated at temperature higher than about 700° to 800°C for 10 to 15 hours , the heating-grinding cycle being repeated if necessary under the aforementioned conditions until the desired phase is produced.

9. Process according to Claim 8, characterized in that all or part of the starting oxides are replaced, if necessary, by compounds leading to the in situ formation of the said oxides as a result of thermal decomposition.

10. Solid electrolytes conducting by means of $O^{2-}$ anions, characterized in that they are produced from at least one composition according to any one of the Claims 1 to 7.

**Claims for the following Contracting State : ES**

1. Manufacturing process for compositions derived from $Bi_4V_2O_{11}$, in which at least one of the constitutive elements is partially substituted, the substituting element M or the substituting elements M and M' being such that the structural type of the gamma phase of $Bi_4V_2O_{11}$ is maintained, and that the balance of the charges and a number of cavities sufficient to allow anionic conductivity are also maintained, characterized in that a mixture of the oxides of bismuth, vanadium, and M and/or M', used in appropriate amounts which depend on the degree of oxidation of M and M', is subjected to a temperature of about 600°C for 10 to 15 hours, the mixture is ground and then heated at temperature higher than 700° to 800°C for 10 to 15 hours , the heating-grinding cycle being repeated if necessary under the aforementioned conditions until the desired phase is produced.

2. Manufacturing process for compositions derived from $Bi_4V_2O_{11}$ according to Claim 1, characterized in that they correspond to the formula (I) :
$$(Bi_{2-x} M_x O_2) (V_{1-y} M'_y O_z) \qquad (I)$$
in which :
   - M represents one or more metal replacements for Bi selected from those having an oxidation number lower than or equal to 3,
   - M' represents one or more elements which can substitute for V, the limit values of x, y and hence z being functions of the nature of the substituting elements M and M'.

3. Manufacturing process for compositions according to Claim 2, characterized in that they correspond to the formula (II):
$$(Bi_2O_2) (V_{1-y} M'_y O_z) \qquad (II)$$
in which :
- M' is as defined in Claim 2, y being other than zero.

4. Manufacturing process for compositions according to Claim 3, characterized in that M' is selected from the alkali metals, alkaline earth metals, the transition metals or even from the elements of groups IIIA to Va or IIIb toVb of the periodic table or from the rare earths.

5. Manufacturing process for compositions according to Claim 2, characterized in that they correspond to the formula III:

$$(Bi_{2-x} M_x O_2) (VO_z) \qquad (III)$$

in which :
- M is as defined in Claim 2, x being other than zero.

6. Manufacturing process for compositions according to Claim 5, in which M represents lanthanum.

7. Manufacturing process for compositions according to Claim 2, characterized in that they correspond to formula (I) in which x and y are other than zero.

8. Process according to any one of the Claims 1 to 7, characterized in that all or part of the starting oxides are replaced, if necessary, by compounds leading to the <u>in situ</u> formation of the said oxides as a result of thermal decomposition.

9. Manufacturing process for solid electrolytes conducting by means of $O^{2-}$ anions, characterized in that they are produced from at least one composition according to any one of the Claims 1 to 7.

FIGURE I

FIGURE 2

E= 0.27 eV

E= 0.64 eV

FIGURE 3

E= 0.66 eV

E= 0.27 eV

EP 0 483 259 B1

FIGURE 4

E=  0.36 eV